# EUROPÄISCHE PATENTANMELDUNG

(11) **EP 2 733 427 A1**
(43) Veröffentlichungstag der Anmeldung: **21.05.2014**
(21) Anmeldenummer: 13192815.2
(22) Anmeldetag: 14.11.2013
(51) Int. Cl.: F24C 7/08, H05B 6/64

(54) **Gargerät**

(30) Priorität: 16.11.2012 DE 102012221015
(71) Anmelder: E.G.O. Elektro-Gerätebau GmbH, 75038 Oberderdingen (DE)
(72) Erfinder: Bellm, Mathias, 76698 Ubstadt (DE)
(74) Vertreter: Patentanwälte Ruff, Wilhelm, Beier, Dauster & Partner

(57) **Zusammenfassung**

Ein Gargerät, insbesondere ein Backofen, weist einen Garraum mit Garraumwänden auf sowie eine Lüfteröffnung in den Garraum hinein. Diese Lüfteröffnung ist an einem vor einer Garraumwand angebrachten Lüfterblech vorgesehen, wobei eine Antenne zur drahtlosen Signalübertragung mit einer in den Garraum befindlichen Meßeinrichtung mit Sende- und Empfangsantenne vorgesehen ist. Die Antenne ist zwischen Lüfterblech und Garraumwand angeordnet und so abgedeckt bzw. nach innen geschützt. Vorteilhaft ist sie dabei vollständig abgedeckt.

## Beschreibung

Die Erfindung betrifft ein Gargerät, insbesondere einen Backofen, mit einem Garraum, der von Garraumwänden gebildet wird.

Aus der DE 102005046012 B3 ist es bekannt, in einem Backofen als Gargerät eine Temperatursonde vorzusehen mit einer eigenen Antenne, die drahtlos mit einer weiteren Antenne kommuniziert, welche fest im Backofen eingebaut ist. Dabei ist diese Antenne des Backofens knapp unterhalb der Muffeldecke zwischen Windungen eines Rohrheizkörpers als Beheizung für den Backofen angeordnet. Damit ist sie aber sowohl Verschmutzung als auch möglicherweise mechanischer Beschädigung beim Reinigen des Backofens ausgesetzt.

Aus der DE 102007043370 B3 ist ein ähnlicher Backofen bekannt. Bei diesem soll das Problem einer möglichen Beschädigung der Antenne durch eine zusätzliche Befestigung des freien Antennenendes gelöst werden. Das Problem einer möglichen Verschmutzung wird dadurch aber immer noch nicht gelöst.

### Aufgabe und Lösung

Der Erfindung liegt die Aufgabe zugrunde, ein eingangs genanntes Gargerät zu schaffen, mit dem Probleme des Standes der Technik gelöst werden können und es insbesondere möglich ist, eine vorteilhafte Anordnung für eine solche Antenne des Gargeräts zu schaffen, die vorzugsweise möglichst wenig zusätzlichen Aufwand bedeutet.

Gelöst wird diese Aufgabe durch ein Gargerät, insbesondere einen Backofen, mit den Merkmalen des Anspruchs 1. Vorteilhafte sowie bevorzugte Ausgestaltungen der Erfindung sind Gegenstand der weiteren Ansprüche und werden im Folgenden näher erläutert. Der Wortlaut der Ansprüche wird durch ausdrückliche Bezugnahme zum Inhalt der Beschreibung gemacht.

Es ist vorgesehen, dass das Gargerät einen Garraum aufweist mit Garraumwänden. Im Falle eines Backofens ist dies eine sogenannte Muffel. Das Gargerät weist eine Lüfteröffnung auf in den Garraum hinein, wie es vor allem von Backöfen bekannt ist, aber auch von Dampfgarern. Die Lüfteröffnung selbst ist in einem sogenannten Lüfterblech vorgesehen, welches auch eine Funktion eines Luftleitblechs übernehmen kann bzw. als solches ausgebildet sein kann, das vor der Garraumwand angeordnet ist. Des Weiteren ist eine Antenne zur drahtlosen Signalübertragung mit einer in dem Garraum befindlichen Messeinrichtung vorgesehen, wobei diese Messeinrichtung mindestens eine Sende- und Empfangsantenne aufweist. Es können auch mehrere Antennen sein. Derartige Messeinrichtungen sind vor allem Temperaturmesseinrichtungen, insbesondere nach Art von elektrischen Thermometern oder auch sogenannten Bratenspießen, wie sie insbesondere aus der vorgenannten DE 102005046012 B3 hervorgehen. Dabei ist zu beachten, dass das Lüfterblech eben unterschiedlich bzw. getrennt ist von der Garraumwand, vor der es angeordnet ist. Die Garraumwände sind üblicherweise einteilig und dicht miteinander verbunden, während das Lüfterblech vorteilhaft davor gesetzt ist. Jedoch weist es zumindest an einer Seite, vorteilhaft an mehreren oder allen Seiten, einen Abstand zu dieser Garraumwand sowie zu den benachbarten Garraumwänden auf. Es weist auch Öffnungen bzw. Schlitze odgl. auf, so dass hier Luft angesaugt werden kann, welche von dem Lüfter des Gargeräts zu der Lüfteröffnung wieder ausgeblasen wird. Das Lüfterblech ist also vorteilhaft ein zusätzlich in dem Garraum angebrachtes Teil, das aber ohnehin vorgesehen ist für eine Abdeckung des Lüfters, beispielsweise auch zur Luftführung bzw. als Luftleitblech.

Erfindungsgemäß ist die Antenne zwischen dem Lüfterblech und der dahinter liegenden Garraumwand angeordnet. So kann sie einerseits gut gegen Verschmutzung sowie mechanische Beschädigung beim Reinigen odgl. geschützt werden. Des Weiteren befindet sich die Antenne damit aber innerhalb des Garraumes, so dass eine ausreichend gute drahtlose Signalverbindung mit der Messeinrichtung möglich ist, insbesondere weil das Lüfterblech ja, wie zuvor beschrieben worden ist, Öffnungen in den Garraum hinein aufweist.

In einer ersten grundsätzlichen Ausgestaltung der Erfindung ist es möglich, dass die Antenne an der Garraumwand hinter dem Lüfterblech befestigt ist, insbesondere direkt daran befestigt ist. Dabei kann sie direkt an der Garraumwand anliegen, beispielsweise mit einfachen Schellen oder Klemmen befestigt sein. Eine elektrische Verbindung der Antenne ist nach außen geführt, insbesondere durch die Garraumwand hindurch. Vorteilhaft wird hier ein Kabel verwendet mit einer temperaturbeständigen Umhüllung bzw. Isolierung.

Einerseits ist es möglich, dass die Antenne in einer Vertiefung an der Garraumwand angeordnet ist. Diese Vertiefung weist vorteilhaft von dem Garraum weg, so dass es möglich ist, die Antenne zumindest teilweise, vorzugsweise gesamt, darin versenkt anzuordnen. So muss zumindest wegen der Antenne kein unnötig großer Abstand des Lüfterblechs von der Garraumwand vorgesehen werden.

Andererseits kann die Antenne mit einem gewissen Abstand, vorzugsweise 1 mm bis 10 mm oder sogar bis 20 mm, an der Garraumwand angebracht sein. Dazu kann ein Abstandshalter verwendet werden, der wiederum an der Garraumwand befestigt ist. Beispielsweise ist es möglich, ein isolierendes Durchführteil durch die Garraumwand als Abstandshalter zu verwenden, in dem auch das vorgenannte Kabel als elektrische Verbindung verläuft. Des Weiteren ist es auch noch möglich, die Antenne als beispielsweise abgewinkeltes Profil auszubilden, und mit dem abgewinkelten Teil in einer Durchführung durch die Garraumwand zu haltern. Auch hierfür kann ein vorgenanntes Durchführteil verwendet werden, vorteilhaft aus elektrisch isolierendem Material wie temperaturbeständigem Kunststoff oder Keramik.

Vorteilhaft ist die Antenne in dem Abstandshalter gehalten, beispielsweise von diesem umgeben. Besonders vorteilhaft ist sie in den Abstandshalter mit einem Ende eingesteckt ist und abgedichtet darin angeordnet. So kann die vorgenannte Führung der elektrischen Verbindung gut erfolgen und die Dichtheit des Garraums gewährleistet werden.

Das Durchführteil sollte allgemein im Wesentlichen luftdicht oder eng an die Antenne anschließen oder diese sogar zumindest teilweise umgeben, so dass keine ungewünschte Öffnung aus dem Garraum in das Innere des Gargeräts hinter der Garraumwand entsteht.

Vorteilhaft ist die Antenne hinter dem Lüfterblech befestigt ist, vorzugsweise an der Garraumwand. Hier ist eine stabile Halterung möglich. Dabei kann vorgesehen sein, dass das Lüfterblech direkt vor der Antenne derart geschlossen ausgebildet ist aus der Sicht des Garraums, so dass sich keine direkte Sichtlinie des Garraums auf die Antenne ergibt. Hier kann das Lüfterblech die Antenne verdecken. So kann sie vor Beschädigung bei Gebrauch oder Reinigung des Backofens geschützt werden sowie vor Verschmutzung.

Bevorzugt ist die Antenne vollständig zwischen Lüfterblech und Garraumwand angeordnet, und zwar vorzugsweise derart, dass kein Teil der Antenne vor das Lüfterblech oder hinter die Garraumwand steht oder seitlich über das Lüfterblech übersteht. Auch so kann die Antenne geschützt werden.

In einer zweiten grundsätzlichen Ausgestaltung der Erfindung ist es möglich, die Antenne an der Rückseite des Lüfterblechs zu befestigen. Hier können grundsätzlich dieselben Befestigungsmittel wie an der Garraumwand vorgesehen sein, also Schellen oder Klemmen, die selbst wiederum an dem Lüfterblech befestigt sind. Es ist zwar grundsätzlich möglich, auch am Lüfterblech eine vorgenannte Vertiefung für die Antenne vorzusehen. Da diese Vertiefung aber eine ansonsten vorteilhaft möglichst glatte Oberfläche des Lüfterblechs in den Garraum hinein unterbrechen würde, könnten hier schwer zu reinigende Bereiche entstehen, welche eigentlich vermieden werden sollen. Eine elektrische Verbindung der Antenne an das Gargerät kann wiederum, wie zuvor genannt, als Kabel ausgeführt sein, welches durch die Garraumwand verlaufen muss. Auch hier kann wieder ein vorgenanntes Durchführteil dafür vorgesehen sein.

In weiterer Ausgestaltung der Erfindung ist ein Lüfterrad des Lüfters zwischen Garraumwand und Lüfterblech angeordnet. Vorteilhaft ist das Lüfterrad unmittelbar hinter der Lüfteröffnung angeordnet, wobei die Lüfteröffnung ein Gitter odgl. aufweisen kann, damit insbesondere beim Betrieb des Lüfters keine Gegenstände durch die Lüfteröffnung hindurch gesteckt werden und den Betrieb des Lüfters stören bzw. das Lüfterrad beschädigen könnten. Ein Lüftermotor für den Lüfter ist vorteilhaft außerhalb des Garraums hinter der Garraumwand angeordnet und mit einer im Wesentlichen abgedichteten Durchführung für eine das Lüfterrad tragende Lüfterwelle versehen.

In vorteilhafter Ausgestaltung der Erfindung ist die Antenne tiefer als ein Lüfter bzw. als die Lüfteröffnung im Lüfterblech angeordnet. So kann erreicht werden, dass die Antenne in Richtung auf eine Zugangstür zu dem Garraum gesehen bzw. in Richtung in den Garraum hinein gesehen von dem Lüfterblech verdeckt wird. Des Weiteren stört die Antenne den vom Lüfter erzeugten und aus der Lüfteröffnung austretenden Luftstrom nicht, wenn sie nicht unmittelbar hinter der Lüfteröffnung liegt. In Abwandlung der Erfindung ist es auch möglich, die Antenne nicht unterhalb der Lüfteröffnung anzuordnen, sondern seitlich daneben oder darüber. Dies hängt auch etwas von der Größe des Garraums sowie der Position der Lüfteröffnung am Lüfterblech ab. Der Vorteil einer eher relativ hoch angeordneten Antenne liegt darin, dass dann eine drahtlose Signalverbindung als Funkstrecke von der genannten Messeinrichtung zur Antenne nach oben ausgerichtet ist und somit nicht durch ein Backblech odgl., auf dem sich ein Gargut mit der Messeinrichtung darin befindet, beeinträch-tigt oder gestört werden kann.

Eine Länge der Antenne beträgt üblicherweise ein Viertel der Wellenlänge, ist also frequenzabhängig. Sie kann einige cm lang sein, vorteilhaft 2 cm bis 25 cm, besonders vorteilhaft etwa 10 cm bis 20 cm. Die Länge entspricht bevorzugt einem Viertel der Wellenlänge, bei 2 cm sind es also 2,4 GHz. Die Ausrichtung der Antenne kann grundsätzlich beliebig sein, vorteilhaft ist sie eben bei einer Anordnung unter oder oberhalb der Lüfteröffnung horizontal ausgerichtet.

Diese und weitere Merkmale gehen außer aus den Ansprüchen auch aus der Beschreibung und den Zeichnungen hervor, wobei die einzelnen Merkmale jeweils für sich allein oder zu mehreren in Form von Unterkombinationen bei einer Ausführungsform der Erfindung und auf anderen Gebieten verwirklicht sein und vorteilhafte sowie für sich schutzfähige Ausführungen darstellen können, für die hier Schutz beansprucht wird. Die Unterteilung der Anmeldung in einzelne Abschnitte sowie Zwischen-Überschriften beschränken die unter diesen gemachten Aussagen nicht in ihrer Allgemeingültigkeit.

### Kurzbeschreibung der Zeichnungen

Ausführungsbeispiele der Erfindung sind in den Zeichnungen schematisch dargestellt und werden im Folgenden näher beschrieben. In den Zeichnungen zeigen:
Fig. 1 eine Ansicht eines erfindungsgemäßen Backofens als Gargerät von vorne mit Lüfterblech und dahinter angeordneter Antenne und
Fig. 2 eine Seitenansicht der Anordnung der Antenne hinter dem Lüfterblech.

### Detaillierte Beschreibung der Ausführungsbeispiele

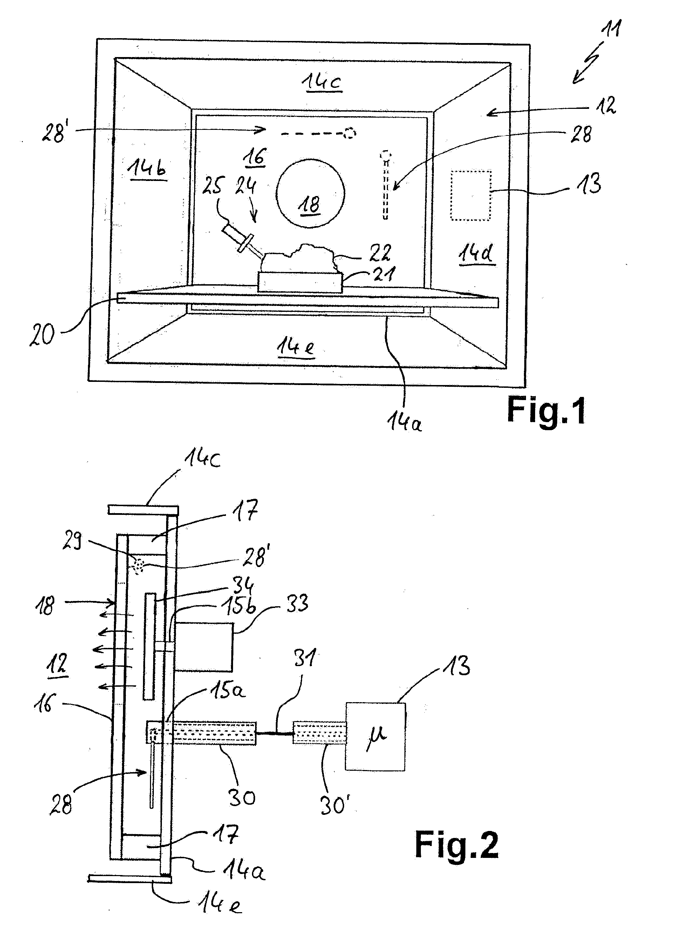

In Fig. 1 ist ein Backofen 11 als erfindungsgemäßes Gargerät dargestellt in Ansicht von vorne ohne Tür. Der Backofen 11 weist einen Garraum 12 auf, üblicherweise auch als Kavität oder Muffel bezeichnet, sowie eine schematisch dargestellte Steuerung 13. Der Garraum 12 wird von Garraumwänden 14 gebildet, wobei eine Garraumwand 14a eine Rückseite bildet, eine Garraumwand 14b eine linke und eine Garraumwand 14d eine rechte Seite. Die Oberseite wird von einer Garraumwand 14c gebildet und die Unterseite von einer Garraumwand 14e. Es ist zu erkennen, insbesondere auch aus der Seitenansicht in Fig. 2, dass vor der hinteren Garraumwand 14a ein Lüfterblech 16 montiert ist, welches auch als Luftleitblech angesehen werden kann.

Es ist zu erkennen, dass das Lüfterblech 16 an den Seiten nicht ganz so groß ist wie die Garraumwand 14a bzw. zurücksteht. Das Luftleitblech kann auch am Rand mit der Garraumrückwand direkt verbunden sein, beispielsweise verschraubt. Durch hier nicht dargestellte, aber einfach zu realisierende Schlitze im Lüfterblech 16 kann Luft dahinter gelangen, wie nachfolgend noch erläutert wird. Im Lüfterblech 16 befindet sich außerdem eine Lüfteröffnung 18 in runder Form. In der Praxis kann sie mit Gittern, Stäben odgl. versehen sein. Aus der Seitendarstellung in Fig. 2 ist zu ersehen, dass das Lüfterblech 16 mittels Abstandshaltern 17 an der Garraumwand 14a befestigt ist, beispielsweise angeschraubt ist.

In dem Garraum 12 befindet sich ein Backblech 20 mit einer Bratenform 21 und einem Braten 22 darin. In dem Braten 22 ist ein sogenannter Bratenspieß 24 eingesteckt, wie er insbesondere aus der vorgenannten DE 102005046012 B3 hervorgeht. Er weist an der nicht dargestellten vorderen Spitze einen Temperatursensor auf zur Messung der Kerntemperatur des Bratens 22. Diese gemessene Temperatur soll an die Steuerung 13 übertragen werden, wozu der Bratenspieß 24 eine Mess-Antenne 25 aufweist, vorteilhaft an seinem herausstehenden Ende.

Zur drahtlosen Signalverbindung mit der Mess-Antenne 25 ist eine Antenne 28 am Backofen 11 fest angeordnet, die mit der Steuerung 13 verbunden ist, wie aus Fig. 2 zu ersehen ist. Insgesamt sind hier verschiedene Positionen für die Antenne 28 dargestellt, und zwar in der Fig. 1 eine Position rechts neben der Lüfteröffnung 18 auf etwa gleicher Höhe und mit vertikaler Ausrichtung. Des Weiteren ist eine Antenne 28' oberhalb der Lüfteröffnung 18 mit horizontaler Ausrichtung gestrichelt dargestellt. In der Fig. 2 ist eine nochmals weitere Position der Antenne 28 dargestellt, und zwar unterhalb der Lüfteröffnung 18. Sind mehrere Antennen vorgesehen so können sie in allen diesen Positionen angeordnet sein.

Aus der Fig. 2 kann ersehen werden, dass die Antenne 28 an der hinteren Garraumwand 14a befestigt ist. Dazu dient ein Durchführteil 30, vorteilhaft aus temperaturbeständigem Kunststoff oder Keramik. Die Antenne 28 ist in ein über die Garraumwand 14a überstehendes Ende des Durchführteils 30 eingesteckt und wird so daran gehaltert. Ein Verbindungskabel 31, das insbesondere als Koaxialkabel ausgebildet ist, verläuft durch einen Kanal im Durchführteil 30 zu der Steuerung 13, wobei hier möglicherweise noch eine Abschirmung 30' vorgesehen sein kann. Das Durchführteil 30 selbst ist durch eine entsprechende Öffnung 15a in der Garraumwand 14a geführt und sitzt dort passgenau. So kann es zum Einen darin befestigt sein. Zum Anderen sollte die Öffnung 15a möglichst abgedichtet sein, damit keine heiße Luft aus dem Garraum 12 entweicht. Dies wäre energetisch nicht gut und würde vor allem die Bereiche hinter der Garraumwand 14a, also außerhalb des Garraums 12, negativ beeinträchtigen oder beschädigen.

Die Antenne 28 selbst ist vorteilhaft aus Metall gebildet und kann ein Stab oder Rohr sein mit einer Länge von etwa 2 cm bis 25 cm, vorteilhaft 10 cm bis 20 cm, unter Umständen auch etwas kürzer oder etwas länger. Hier ist die Antenne 28 derart in dem Durchführteil 30 gelagert, dass sie mechanisch befestigt ist und in gewünschter Position gehalten wird. Gleichzeitig dichtet das Durchführteil 30 eben die Öffnung 15a in der Garraumwand 14a ab und schützt das innenliegende Verbindungskabel 31. Es ist leicht zu erkennen, dass die Antenne 28 auch näher an dem Lüfterblech 16 angeordnet sein könnte oder ganz dicht vor der Garraumwand 14a.

Die Verbindung der Antenne 28 mit dem Durchführteil 30 sollte nicht nur mechanisch halten, sondern auch im Wesentlichen dicht bzw. luftdicht sein. So kann ein vorbeschriebenes Entweichen von heißer Luft aus dem Garraum 12 vermieden werden, und darüber hinaus ist auch noch das innenliegende Verbindungskabel 31 besser vor zu hohen Temperaturen geschützt.

Oben in der Fig. 2 ist gestrichelt die alternative Anordnung der Antenne 28' in horizontaler Ausrichtung dargestellt mit einer Klemme 29. Diese Klemme 29 ist an der Rückseite des Lüfterblechs 16 befestigt. So ist die Anordnung und Befestigung der Antenne 28' am Lüfterblech 16 selbst möglich. Um ein hier nicht dargestelltes elektrisches Verbindungskabel durch eine der Garraumwände 14 nach außen zu führen, kann wiederum ein Durchführteil ähnlich dem Durchführteil 30 verwendet werden.

In der Fig. 2 ist auch der an der Rückseite der Garraumwand 14a vorgesehene Lüftermotor 33 dargestellt, der ein Lüfterrad 34 antreibt. Dazu verläuft die Motorwelle durch eine Öffnung 15b in der Garraumwand 14a, die vorteilhaft ebenfalls abgedichtet ist. Die Antenne 28 bzw. 28' hält etwas Abstand zu dem Lüfterrad 34 ein.

Aus Fig. 2 ist auch zu ersehen, dass das Lüfterrad 34 durch das Lüfterblech 16 angesaugte Luft durch die Lüfteröffnung 18 in den Garraum 12 hineinblasen kann bzw. in Richtung des Bratens 22. Dabei ist üblicherweise um das Lüfterrad 34 herum der Heißluftheizkörper angeordnet, der die Luft auf ihrem Weg zurück in den Garraum 12 hinein erwärmt.

Nicht dargestellt in der Fig. 2 ist die Möglichkeit, wie eine Antenne 28 bzw. 28' in einer Vertiefung in der Garraumwand 14a oder dem Lüfterblech 16 angeordnet sein kann. Dies ist für den Fachmann jedoch leicht vorstellbar anhand der Fig. 2. Des Weiteren ist aus Fig. 2 zu ersehen, dass sowohl die Antenne 28 als auch die Antenne 28' zum Garraum 12 hin abgeschirmt bzw. abgedeckt sind und somit sowohl vor Verschmutzung als auch vor Beschädigung geschützt sind. Die Funkverbindung zu der Mess-Antenne 25 des Bratenspießes 24 wird dabei zwar etwas beeinträchtigt. Es ist aber möglich, die eine Antenne oder die mehreren Antennen so zu positionieren, dass die Funkverbindung im Ergebnis noch ausreichend gut ist.

In aus der Fig. 2 leicht erkennbarer Abwandlung der Erfindung kann die Antenne 28 auch an einem der Abstandshalter 17 für das Lüfterblech 16 befestigt sein ähnlich wie an dem Durchführteil 30. Wenn dann der Abstandshalter 17 auch hohl ausgebildet ist, kann hier wiederum wie beim Durchführteil 30 ein Verbindungskabel der Antenne 28 aus dem Garraum 12 hinaus bzw. durch die Garraumwand 14a hindurchgeführt werden. Dadurch kann eine weitere Öffnung 15a in der Garraumwand 14a eingespart werden.

Aus den Figuren ist gut zu ersehen, wie die Antenne 28 bzw. 28' hinter dem Lüfterblech 16 angeordnet ist, und zwar neben der Lüfteröffnung 18, wobei das Lüfterblech aus Sicht vom Garraum 12 direkt vor der Antenne 28 bzw. 28' geschlossen ist. Es gibt keine Öffnung odgl. im Lüfterblech 16 vor der Antenne, so dass die direkte Sichtlinie zwischen Garraum 12 und Antenne 28 bzw. 28' versperrt ist. So kann die Antenne 28 bzw. 28' vor Verschmutzung und Beschädigung geschützt werden. Des Weiteren ist zu ersehen, dass die Antenne 28 bzw. 28' vollständig zwischen Lüfterblech 16 und Garraumwand 14a angeordnet ist. Somit steht auch kein Teil der Antenne vor Lüfterblech 16 oder hinter Garraumwand 14a über oder seitlich über das Lüfterblech 16 hinaus. Auch dadurch ist die Antenne gut geschützt, während ihre Funktionalität nicht groß beeinträchtigt wird, da die Funksignale seitlich aus dem Raum zwischen Lüfterblech 16 und Garraumwand 14a austreten können.

## Patentansprüche

1. Gargerät, insbesondere Backofen, mit einem Garraum mit Garraumwänden, wobei das Gargerät eine Lüfteröffnung in den Garraum hinein aufweist, wobei diese Lüfteröffnung an einem vor einer Garraumwand angebrachten Lüfterblech vorgesehen ist, wobei eine Antenne zur drahtlosen Signalübertragung mit einer in dem Garraum befindlichen Meßeinrichtung mit Sende- und Empfangsantenne vorgesehen ist, **dadurch gekennzeichnet, dass** die Antenne zwischen Lüfterblech und Garraumwand angeordnet ist.

2. Gargerät nach Anspruch 1, **dadurch gekennzeichnet, dass** die Antenne an der Garraumwand hinter dem Lüfterblech befestigt ist, insbesondere mit einer nach außen geführten elektrischen Verbindung, vorzugsweise einem Kabel.

3. Gargerät nach Anspruch 2, **dadurch gekennzeichnet, dass** die Antenne in einer Vertiefung in der Garraumwand angeordnet ist.

4. Gargerät nach Anspruch 2, **dadurch gekennzeichnet, dass** die Antenne in einem Abstand an der Garraumwand angebracht ist, vorzugsweise mittels Abstandshalter, wobei insbesondere der Abstandshalter von einem isolierenden Durchführteil durch die Garraumwand gebildet ist, in dem auch die elektrische Verbindung verläuft.

5. Gargerät nach Anspruch 4, **dadurch gekennzeichnet, dass** die Antenne in dem Abstandshalter gehalten ist, vorzugsweise von diesem umgeben bzw. in diesen mit einem Ende eingesteckt ist und abgedichtet darin angeordnet ist.

6. Gargerät nach Anspruch 1 oder 2, **dadurch gekennzeichnet, dass** die Antenne hinter dem Lüfterblech befestigt ist, vorzugsweise an der Garraumwand, wobei das Lüfterblech direkt vor der Antenne geschlossen ist aus der Sicht des Garraums, so dass sich keine direkte Sichtlinie des Garraums auf die Antenne ergibt, sondern dass hier das Lüfterblech die Antenne verdeckt.

7. Gargerät nach einem der vorhergehenden Ansprüche, **dadurch gekennzeichnet, dass** die Antenne vollständig zwischen Lüfterblech und Garraumwand angeordnet ist.

8. Gargerät nach Anspruch 7, **dadurch gekennzeichnet, dass** kein Teil der Antenne vor das Lüfterblech oder hinter die Garraumwand übersteht oder seitlich über das Lüfterblech übersteht.

9. Gargerät nach einem der vorhergehenden Ansprüche, **dadurch gekennzeichnet, dass** die Antenne an der Rückseite des Lüfterblechs befestigt ist.

10. Gargerät nach Anspruch 9, **dadurch gekennzeichnet, dass** die Antenne an der Rückseite des Lüfterblechs befestigt ist mit einer nach außen geführten elektrischen Verbindung, vorzugsweise mit einem Kabel.

11. Gargerät nach einem der vorhergehenden Ansprüche, **dadurch gekennzeichnet, dass** ein Lüfterrad des Lüfters zwischen Garraumwand und Lüfterblech angeordnet ist, insbesondere unmittelbar hinter der Lüfteröffnung.

12. Gargerät nach Anspruch 11, **dadurch gekennzeichnet, dass** ein Lüftermotor außerhalb des Garraums hinter der Garraumwand angeordnet ist.

13. Gargerät nach einem der vorhergehenden Ansprüche, **dadurch gekennzeichnet, dass** die Antenne tiefer als ein Lüfter bzw. als die Lüfteröffnung im Lüfterblech angeordnet ist.

14. Gargerät nach Anspruch 13, **dadurch gekennzeichnet, dass** die Antenne in Richtung auf eine Zugangstür zu dem Garraum gesehen von dem Lüfterblech verdeckt wird und in dieser Richtung nicht unmittelbar hinter der Lüfteröffnung liegt.
